**Europäisches Patentamt**

**European Patent Office**

**Office européen des brevets**

(19)

(11) Veröffentlichungsnummer: **0 200 147**
**A2**

(12) **EUROPÄISCHE PATENTANMELDUNG**

(21) Anmeldenummer: **86105575.4**

(22) Anmeldetag: **22.04.86**

(51) Int. Cl.⁴: **C 01 B 17/033**

(30) Priorität: **02.05.85 DE 3515709**

(43) Veröffentlichungstag der Anmeldung:
**05.11.86 Patentblatt 86/45**

(84) Benannte Vertragsstaaten:
**AT BE CH DE FR GB IT LI LU NL SE**

(71) Anmelder: **Union Rheinische Braunkohlen Kraftstoff Aktiengesellschaft**
**Ludwigshafener Strasse o. Nr. Postfach 8**
**D-5047 Wesseling(DE)**

(72) Erfinder: **Schriewer, Peter**
**Blessemer Strasse 1**
**D-5042 Erftstadt-Lechenich(DE)**

(72) Erfinder: **Hentges, Rene**
**Bunsenstrasse 23**
**D-5047 Wesseling(DE)**

(72) Erfinder: **Keim, Karl-Heinz**
**Höhenring 31**
**D-5357 Swisttal-Heimerzheim(DE)**

(72) Erfinder: **Hammer, Hartmut, Dr.**
**Leyboldstrasse 21**
**D-5000 Köln 1(DE)**

(54) **Verfahren zum Reinigen von flüssigem Schwefel.**

(57) Die Erfindung betrifft ein Verfahren zum Reinigen von flüssigem Schwefel mit flüssigem Wasser als Reinigungsmittel und Stickstoff enthaltenden Zusätzen.

EP 0 200 147 A2

Wesseling, den 09.04.1986
NL-Dr.Hö/Ss        - 2115 -

Unser Zeichen: - UK 361 a -

## Verfahren zum Reinigen von flüssigem Schwefel

Die Erfindung betrifft ein Verfahren zum Reinigen von flüssigem Schwefel mit flüssigem Wasser als Reinigungsmittel und Stickstoff enthaltenden Zusätzen.

Die Entfernung von Verunreinigungen, insbesondere von $H_2S$ aus flüssigem Schwefel ist von großer technischer Bedeutung, da bei der Handhabung des flüssigen Schwefels z.B. bei Verladung, Transport und Weiterverwendung sehr hohe Anforderungen bezüglich der Abwesenheit von $H_2S$ gestellt werden. $H_2S$ ist nicht nur stark toxisch, sondern kann auch zur Bildung explosiver Gasgemische führen. Bei der Reinigung des Schwefels ist zu berücksichtigen, daß durch das Vorliegen von im Schwefel gelösten Polysulfiden, Schwefelwasserstoff immer wieder nachgebildet wird, so daß die Aufgabe zu lösen ist, nicht nur $H_2S$ zu entfernen, sondern auch die Polysulfide zu zerstören. Technischer flüssiger Schwefel enthält zudem häufig Feststoffpartikel in fein verteilter Form, beispielsweise Koksteilchen, Ascheteilchen u.a. Diese verleihen je nach vorliegender Menge dem Schwefel eine Graufärbung und sind für die Weiterverwendung des Schwefels unerwünscht.

Flüssiger Schwefel fällt bei verschiedenen Gewinnungsverfahren an, insbesondere in großer Menge bei Claus-Prozessen und ähnlichen Prozessen.

Der Bedeutung der Schwefelreinigung entsprechend besteht ein sehr umfangreicher Stand der Technik, der sich vor allem mit

der H$_2$S- und Polysulfidentfernung befaßt. Die meisten der bekannten Verfahren führen nicht zur möglichst vollständigen H$_2$S-Entfernung bis <10 ppm. Bei einer Reihe der bekannten Verfahren werden Gase als Strippmittel verwendet, ggfs. in Gegenwart kleiner Mengen NH$_3$. Auch wenn durch diese Verfahren in einzelnen Fällen eine weitgehende Befreiung von H$_2$S und Polysulfiden erzielt wird, treten sehr unangenehme Anbackungen in den gasführenden Leitungen, vor allem durch Ammoniumverbindungen auf, so daß die technische Durchführung der Verfahren sehr erschwert wird. Ferner sind große Anlagen mit langen Verweilzeiten erforderlich. In US-PS 3 364 655 wird ein Verfahren beschrieben, gemäß welchem Strahlen flüssigen Schwefels auf feste Körper aufprallen, wobei der Schwefel H$_2$S abgibt.

Nach DE-OS 22 21 022 wird flüssigem Schwefel SO$_2$ und ein Additiv zugesetzt, um eine Umsetzung des Rest-H$_2$S zu Schwefel herbeizuführen.

Nach DE-OS 27 34 619 wird in Gegenwart von Luft bzw. Sauerstoff als Spülgas Schwefel über einen Katalysator geleitet, der aus Co/Mo auf Aluminiumoxid besteht, um die Polysulfide zu zerstören. Nach vierstündiger Behandlung erhält man Schwefel, der noch ca. 18 ppm H$_2$S$_x$ und ca. 4 ppm freien H$_2$S enthält.

Die Zersetzung von Polysulfiden über Quarz oder Glaspulver ist in der Zeitschrift für anorganische Chemie 255 (1947) S. 185 - 188 beschrieben.

Nach GB-PS 1 402 274 wird flüssiger Schwefel in einem 1. Schritt mit Claus-Tail-Gas behandelt und anschließend mit NH$_3$. In einer 2. Stufe wird mit Inertgas gestrippt. Gemäß diesem Verfahren verbleiben Restmengen von 7 bis 9 ppm H$_2$S im Schwefel.

Nach der OS 28 42 141 wird Schwefelwasserstoff aus flüssigem Schwefel entfernt, in dem man diesen über ein Quarzbrett leitet und einen, kleine Mengen $NH_3$ enthaltenden Inertgasstrom im Gegenstrom durch den Schwefel leitet.

Nach diesem Verfahren, es handelt sich um ein Verfahren der Anmelderin der vorliegenden Erfindung, werden zwar Rest-$H_2$S-Mengen bis 3 ppm erreicht, Versuche zur technischen Anwendung haben jedoch ergeben, daß sehr störende Anbackungen von Ammoniumverbindungen in der Anlage, insbesondere in den Leitungen auftreten, daß ferner ein Aufschwimmen der Quarzkörper auftreten kann, so daß Quarz in andere Anlagenbereiche ausgetragen wird und daß ferner unerwünschtes Schäumen auftritt. Die Untersuchungen der Anmelderin haben daher zu dem Ergebnis geführt, daß das Verfahren bei der technischen Anwendung zu Problemen führt.

Auch die Extraktion von flüssigem Schwefel mit Wasser im Gegenstrom ist aus der US-PS 4,002,728 bekannt. In diesem Patent wird eine wenigstens 2-stufige bis 10-stufige Wasserextraktion beschrieben, wobei wenigstens das gleiche Volumen Wasser pro Volumen flüssigem Schwefel eingesetzt wird (Spalte 3, Zeile 1).

Gemäß den Beispielen 1 - 3 wird die 2- bis 3-fache Menge an Wasser eingesetzt. In Anspruch 8 wird die 3- bis 6-fache Menge Wasser beansprucht. Obgleich in diesem Patent sowohl $H_2$S als auch "chemisch gebundener" Schwefelwasserstoff als Verunreinigungen von flüssigem Schwefel genannt werden (z.B. Spalte 1, Zeilen 59 - 61) wird in den Beispielen und Ansprüchen nur die Entfernung von $H_2$S offenbart. Nach dieser Offenbarung kann $H_2$S bis zur Nachweisgrenze entfernt werden (s.z. B. Beispiel 2).

Verweilzeiten in der Extraktionsanlage werden in dem Patent nicht angegeben.
Es ist jedoch dem Fachmann bekannt, daß sich "chemisch gebundener Schwefelwasserstoff, nämlich $H_2S_x$ im Gleichgewicht mit $H_2$S

im flüssigen Schwefel befindet, so daß sich auch bei vollständiger Entfernung von freiem $H_2S$, letzterer wieder aus dem $H_2S_x$
nachbilden kann. Das in dieser Patentschrift offenbarte Verfahren wurde in Vergleichsversuchen mit dem vorliegenden erfindungsgemäßen Verfahren verglichen.
Bei keinem der genannten Verfahren wird eine weitgehende Entfernung der oben genannten Feststoffpartikel erreicht.

Aufgabe der vorliegenden Erfindung war daher die Bereitstel-.
lung eines Verfahrens, das die beschriebenen Mängel des Standes
der Technik vermeidet, nämlich    die Anwendung großer Mengen
an Waschflüssigkeit, ferner den vollständigen Abbau der Polysulfide und deren vollständige Entfernung bei technisch brauchbaren Verweilzeiten ermöglicht und zur weitgehenden Beseitigung
der Feststoffpartikel führt.

Überraschend wurde gefunden, daß die Lösung dieser Aufgabe
durch ein Verfahren zum Reinigen von flüssigem Schwefel erreicht
wird, wobei die Reinigung ab einer Temperatur erfolgt, bei
der der Schwefel zumindest teilweise flüssig bis zu einer Temperatur von 400°C und einem Druck zwischen Normaldruck oder
geringem Unterdruck bis zum kritischen Druck von
Wasser, dadurch gekennzeichnet, daß das Wasser Ammoniak und/
oder Amine und/oder Ammoniumverbindungen und/oder Hydrazin
in einer Menge von 1 ppm bis 20 Gew.%, bevorzugt in einer Menge
von 5 ppm bis 10 Gew.% und besonders bevorzugt von 10 ppm bis
5 Gew.% enthält, daß die Kontaktzeit zwischen der Schwefel-
und Wasserphase 1 Sekunde bis 3 Stunden und bevorzugt von 1
Sekunde bis 60 Minuten beträgt.

Das Mischen von flüssigem Schwefel und flüssigem Wasser kann
in Behältern mit Mischorganen durchgeführt werden, wie beispielsweise Rührern, Verteilerböden, statischen Mischern, rotating discs, sonstigen Einbauten oder Verteilerkörpern wie
Raschigringen und ähnlichen Füllkörpern oder auch Inertkörpern
wie beispielsweise Quarz, Porzellan, Koks und anderen Feststoffen, es kann jedoch auch durch Rühren oder
Eindüsen fein verteilten Wassers in den flüssigen Schwefel
erfolgen, oder umgekehrt, wobei sich gegebenenfalls zusätzliche
Mischorgane erübrigen. Besonders geeignet sind Mischorgane,
z.B. nach dem Mixer/Settler-Prinzip, die Wasser und Schwefel
mischen, wobei das Gemisch anschließend in einem Absitzgefäß
in Schwefel- und Wasserphase getrennt wird, ferner Pumpen als
Mischpumpen. Die Reinigung kann sowohl durch einstufige als
auch mehrstufige Behandlung mit Wasser erfolgen. Erfindungsgemäß
kann jedoch mit sehr guten Ergebnissen 1-stufig gemischt werden,
ggfs. mit einer Nachwäsche. Weiter verbesserte Ergebnisse
können in Abhängigkeit von den sonstigen Bedingungen durch
mehrstufige Wäsche erhalten werden. Das Wasser kann ferner
im Kreislauf nach Phasentrennung zur Mischeinheit rückgeführt
werden.

Flüssiger Schwefel und flüssiges Wasser können erfindungsgemäß
beispielsweise im Gleichstrom, Kreuzstrom oder Gegenstrom geführt werden, das Verfahren kann ferner sowohl diskontinuierlich
als auch kontinuierlich durchgeführt werden.

Die Vorrichtung, in der flüssiger Schwefel und flüssiges Wasser miteinander
in Kontakt gebracht werden, kann eine sehr unterschiedliche Form haben. Es
kann sich um einen zylindrischen aufrecht stehenden Behälter handeln, es
kann jedoch auch ein anders geformter Behälter sein. Als Mischbehälter kann
auch beispielsweise ein Rohr dienen, in dem sich ggfs. ein Mixer befindet,
wobei das Rohr senkrecht oder horizontal angeordnet sein kann. Auch eine
Mischschlaufe ist beispielsweise als Mischorgan geeignet.

Die genannten Vorrichtungen sind hierbei als beispielhaft,
jedoch nicht als einengend anzusehen.

Erfindungsgemäß wurde überraschend gefunden, daß bereits kleine
Mengen Wasser mit den erfindungsgemäßen Zusätzen bei nur kurzer
Mischdauer nicht nur den $H_2S$ aufnehmen und aus dem Schwefel
entfernen, sondern auch die Polysulfide zerstören und entfernen
und ferner im flüssigen Schwefel suspendierte Feststoffe in
Gegenwart der genannten Zusätze austragen, so daß ein heller,
reiner Schwefel entsteht. Obgleich das Wasser erfindungsgemäß
im allgemeinen in flüssiger Form zugemischt wird (bei dem erforderlichen Druck), kann es auch dampfförmig zugegeben werden, wobei unter den Reinigungsbedingungen zumindest teilweise Verflüssigung des Wassers eintritt. Die erfindungsgemäßen Zusätze können einzeln oder im Gemisch vorliegen, wobei $NH_3$ bevorzugt ist. Bei den Mengen an erfindungsgemäßen Zusätzen sind im rohen Schwefel ggfs. vorliegende Säuren außer $H_2S/H_2S_x$ in der Weise zu berücksichtigen, daß mit zunehmenden Anteilen an solchen Säuren die Zusatzmengen im allgemeinen erhöht werden sollten.

Wie durch die Beispiele noch im einzelnen belegt wird, wird hierbei sowohl $H_2S$ als auch $H_2S_x$ auf bisher unerreichte Werte entfernt.

Grundsätzlich können weitere Zusätze zahlreicher in Wasser löslicher Verbindungen im Waschwasser gelöst sein, da diese einmal zum Teil die Aufspaltung der Polysulfide erleichtern können, zum anderen jedoch die Phasentrennung zwischen flüssigem Schwefel und Wasser nach dem Mischvorgang begünstigen.

Dies können beispielsweise Salze wie Halogenide zahlreicher Metalle, Alkali- und Erdalkalihydroxide und Hydroxide anderer Elemente sein, die insbesondere zur Neutralisation von im rohen Schwefel enthaltenen Säuren außer $H_2S/H_2S_x$ dienen können, Phosphoniumverbindungen u.a.

Die erfindungsgemäße Anwendung von Wasser zur Schwefelreinigung erlaubt zudem, bestimmte weitere Zusätze zuzumischen, z.B. Korrosionsschutzmittel oder oberflächenaktive Verbindungen, die ggfs. die technische Durchführung des Verfahrens zusätzlich verbessern können.

Unter das erfindungsgemäße Verfahren fällt auch die Reinigung mit Wasser und den beanspruchten Zusätzen und bestimmten weiteren Zusätzen wie beispielsweise Alkoholen und anderen organischen Verbindungen, die bei der Reinigung nicht in unerwünschter Weise chemisch umgesetzt werden oder auch von inerte Gas bildenden Verbindungen wie beispielsweise Hydrogencarbonaten, wobei diese Gase das Austragen des $H_2S$ zusätzlich begünstigen. Es können ferner zusätzlich Gase zugegeben werden, wie beispielsweise $N_2$, $CO_2$, Luft, Sauerstoff, Wasserdampf u.a., die ebenfalls den Reinigungsvorgang begünstigen.

Das erfindungsgemäße Verfahren wird mit flüssigem Schwefel durchgeführt.

Demgemäß muß der Schwefel bei dem Mischen mit dem Reinigungsmedium geschmolzen sein. Der Schmelzpunkt des reinen Schwefels
liegt bei 110,2°C (µ-Schwefel im Gleichgewicht). Die Reinigungstemperatur kann jedoch auch bei tieferen Temperaturen
liegen, nämlich dann, wenn ein nicht reiner Schwefel vorliegt,
der bereits bei tieferer Temperatur schmilzt.
Die Reinigung kann ausgehend von der Schmelztemperatur zu höheren Temperaturen von Raumtemperatur bis 400°C durchgeführt
werden, bevorzugt ist jedoch ein Bereich von 110 - 160°C und
besonders bevorzugt ein Temperaturbereich von 110 - 140°C.


Druck und Temperatur werden bevorzugt so eingestellt, daß zumindest teilweise flüssiges Wasser bei der Reinigung vorliegt.
Jedoch kann der Druck bei dem erfindungsgemäßen Verfahren auch
zwischen Normaldruck bis zum kritischen Druck des
Wassers eingestellt werden. Übliche Drucke liegen bei Normaldruck bis 20 bar.
Die Kontaktzeit in den Mischapparaturen beträgt 1 sec. bis
3 Stunden, bevorzugt von 1 sec. bis 60 Minuten.


Nach dem erfindungsgemäßen Verfahren führen bereits sehr kurze
Verweilzeiten, wie aus den Beispielen deutlich wird, zu sehr
guten Ergebnissen. Es ist jedoch selbstverständlich, daß große
Verweilzeiten im allgemeinen ebenfalls zu guten Ergebnissen
führen, wobei jedoch die Wirtschaftlichkeit des Verfahrens im
allgemeinen vermindert ist.
Sehr hohe Verweilzeiten bis 48 Stdn. können jedoch dann eingestellt werden, wenn, wie in chemischen Großanlagen üblich,
Tanks zum Aufbewahren flüssigen Schwefels vorhanden sind, durch
die das Reinigungsmittel hindurchgefahren werden kann. Hierbei
kann das Reinigungsmittel im Kreislauf gefahren werden. Ein
Reinigungsverfahren in Flüssigschwefeltanks ist dadurch gekennzeichnet, daß das Wasser Ammoniak und/oder Amine und/oder
Ammoniumverbindungen und/oder Hydrazin in einer Menge von 1
ppm bis 20 Gew.%, bevorzugt von 5 ppm bis 10 Gew.% enthält,
daß die Kontaktzeit zwischen der Schwefel- und Wasserphase
30 Sekunden bis 48 Stunden beträgt, daß das Verhältnis von von Wasser zu Schwefel 0,1 zu 10 bis 1000:1 beträgt und daß
das Wasser zumindest teilweise im Kreislauf durch den Tank
gefahren wird.

Es ist zu berücksichtigen, daß sehr große Wassermengen dann
wirtschaftlich sein können, wenn anschließend keine besondere
Reinigung des Wassers z.B. in einer Kläranlage oder durch Regeneration erfolgen soll. Das Verhältnis der zur Reinigung
in Mischapparaturen verwendeten Menge an flüssigem Wasser kann
zwischen 10 g bis 5000 g Wasser pro kg Schwefel liegen.
Bevorzugt sind Wassermengen von 10 g bis 2 kg pro kg Schwefel
und besonders bevorzugt 10 g bis 1 kg $H_2O$ pro kg Schwefel.
Die erfindungsgemäßen Zusätze, nämlich Ammoniak und/oder Amine
und/oder Ammoniumverbindungen und/oder Hydrazin können in Abhängigkeit vom im Schwefel gelösten $H_2S$ bzw. $H_2S_x$ in Mengen von
1 ppm bis 20 Gew.% vorliegen. Bevorzugt sind Mengen von 10 ppm
bis 10 Gew.%, besonders bevorzugt von 10 ppm bis 5 Gew.%.
Nach dem eigentlichen Reinigen kann eine Entfernung von Restwasser aus dem
Schwefel durch Entspannen erfolgen, ggf. auch durch Anlegen eines Vakuums.
Nach der eigentlichen Reinigung kann auch eine Nachspülung des Schwefels
mit Wasser erfolgen. Es kann auch ein zusätzliches Strippen mit einem geeigneten Gas erfolgen, wie z.B. mit $N_2$, $CO_2$, Luft, $O_2$ oder Dampf.
Das Waschwasser kann erfindungsgemäß wiederaufgearbeitet werden durch thermische Spaltung der darin enthaltenen sulfidischen Verbindungen und Austreiben des $H_2S$ und wieder in die
Wäsche rückgeführt werden, wobei ggfs. Verluste an erfindungsgemäßen Zusätzen ergänzt werden müssen.
Mit Hilfe der folgenden Beispiele wird die Erfindung zusätzlich erläutert.

Beispiele

Die in Tabelle 1 zusammengefaßten Versuche wurden durch Mischen
von flüssigem Schwefel und Wasser, das die angegebenen Zusätze
enthielt, durchgeführt.

Nach dem Mischen wurden die Phasen getrennt und $H_2S/H_2S_x$ (Polysulfid) im
gereinigten Schwefel bestimmt. Da $H_2S$ und $H_2S_x$ ein mobiles, temperaturabhängiges Gleichgewicht bilden, ist in den Zeilen 2 und 13 die Summe von
$H_2S$ und $H_2S_x$ angegeben.

- UK 361a -   0200147

## Tabelle 1

| Versuchs-Nr. | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| $H_2S + H_2S_x$ ppm | 176 | 102 | 102 | 155 | 185 | 950 | 80 | 80 | 80 | 105 | 105 | 80 | 80 | 80 | 100 | 80 |
| $H_2O$/kg S ml | 84 | 160 | 160 | 400 | 600 | 600 | 250 | 400 | 400 | 50 | 50 | 250 | 250 | 250 | 260 | 600 |
| $NH_3$ Gew.% | 1 |  | 0,1 | 0,01 | 0,01 | 0,05 | 0,5 | 0,1 | 0,1 |  |  |  |  |  |  |  |
| $H_2N-NH_2$ Gew.% |  |  |  |  |  |  |  |  |  | 5 | 0,5 | 0,1 |  |  |  |  |
| NaCl |  |  |  |  |  |  |  |  | 1 |  |  |  |  |  |  |  |
| $NH_2CH_3$ Gew.% |  |  |  |  |  |  |  |  |  |  |  |  | 0,5 | 0,5 |  |  |
| $(NH_4)_2CO_3$ Gew.% |  |  |  |  |  |  |  |  |  |  |  |  |  |  | 0,1 | 0,05 |
| Anzahl der Mischvorgänge | 1 | 1 | 1 | 1 | 1 | 1 | 1 | 1 | 1 | 1 | 1 | 1 | 1 | 1 | 1 | 1 |
| Verweilzeit sec./min. | 5 min. | 10 min. | 5 min. | 5 min. | 5 min. | 5 min. | 1 min. | 10 sec. | 10 sec. | 1 min. | 30 sec. | 1 min. | 1 min. | 1 min. | 300 min. | 5 min. |
| Temperatur °C | 125 | 125 | 125 | 125 | 125 | 125 | 125 | 125 | 125 | 135 | 140 | 125 | 125 | 125 | 125 | 125 |
| Druck bar | 2 | 2 | 2 | 2 | 2 | 2 | 2 | 2 | 2 | 4-5 | 5 | 2 | 2 | 2 | 2 | 2 |
| Rest $H_2S$ (einschl. $H_2S_x$) | 1-2 | 2 | 5 | 3 | <1 | 1 | 1 | 2 | 2 | 8 | 9 | 10 | 7 | 2 | 4 | <1 |

In Tabelle 2 sind Vergleichsversuche angegeben, die durch Waschen mit Wasser entsprechend dem in US-PS 4,002,728 angegebenen Stand der Technik durchgeführt wurden.

Tabelle 2

| Versuchs-Nr. | 1 | 2 | 3 | 4 | 5 | 6 | |
|---|---|---|---|---|---|---|---|
| $H_2S + H_2S_x$ ppm | 150 | 150 | 99 | 110 | 237 | 72 | |
| $H_2O$/kg S ml/kg | 118 | 478 | 100 pro Wasch-vorgang | 5 | 2500 | 186 | |
| Anzahl d.Wasch-vorgänge | 1 | 1 | 10 | 20 | 1 | 1 | |
| Verweilzeit sec./min. | 5 min. | 20 min. | 30 min. | 20 min. | 3 min. | 3 min. | |
| Temperatur°C | 125 | 140 | 125 | 125 | 127 | 127 | |
| Rest $H_2S + H_2S_x$ ppm | 70 | 82 | 10 | 30 | 40 | 51 | |

Die Ergebnisse aus Tabelle 1 zeigen, daß in den meisten Versuchen Restmengen an $H_2S + H_2S_x$ von 1 - 4 ppm und teilweise darunter erhalten wurden bei nur einmaligen Waschen und einer Temperatur von 125°C. Beispielsweise wurde in Versuch 1 bei einer Ausgangsmenge von 176 ppm $H_2S + H_2S_x$ und einer Waschwassermenge von 84 g pro kg S die 1 Gew.% $NH_3$ enthielt, bei 125°C Waschtemperatur eine Restmenge an $H_2S + H_2S_x$ von 1 - 2 ppm erhalten.

In den Versuchen 5 und 6 wurde mit 600 ml Wasser und 0,05 bzw. 0,5 Gew.% $NH_3$ unter sonst gleichen Bedingungen eine Ausgangsmenge von 185 ppm bzw. 950 ppm $H_2S + H_2S_x$ auf < 1 ppm bzw. 1 ppm ausgewaschen.
Auch bei kurzer Verweilzeit von 10 sec. (Versuch 9) wurden nur 2 ppm an Rest $H_2S + H_2S_x$ erhalten.

Bei erhöhter Temperatur von 135°C (Versuch 10) und 140°C (Versuch 11) und kleinen Waschwassermengen sowie $NH_3$-Konzentrationen von   5 Gew.% (Versuch 10) und 0,5 Gew.% (Versuch 11) sind die Ergebnisse etwas weniger gut.

Auch der Einsatz von Hydrazin, $NH_3$/Hydrazin-Gemisch, Methylamin und Ammoniumbikarbonat führt, wie die Versuche 12, 13, 14 und 16 zeigen, zu vergleichbar guten Ergebnissen.

Auch mit reinem Schwefel dem $H_2S$/$H_2S_x$ zugesetzt wurde und der anschließend erfindungsgemäß gewaschen wurde, wurden ausgezeichnete Ergebnisse erhalten.

Eingesetzter roher Schwefel aus Clausanlagen, der durch kleine Feststoffpartikel grau gefärbt war, hatte nach der Wäsche ein helles, reines Aussehen.

Das Mischen wurde in den angegebenen Versuchen sowohl in Mischpumpen, Rührmischern, Mixer-Settlern und statischen Mischern erprobt und führte zu gleich guten Ergebnissen.

Im krassen Gegensatz zu den erfindungsgemäßen Ergebnissen sind diejenigen, die durch Wäsche mit Wasser ohne die erfindungsgemäßen Zusätze gemäß Tabelle 2 erhalten wurden.

Vergleicht man Versuch 1 aus Tabelle 2 mit Versuch 1 aus Tabelle 1, so stellt man fest, daß bei Verwendung einer vergleichbaren Menge Wasser gemäß Tabelle 2 ein völlig unbrauchbares Ergebnis von 70 ppm $H_2S$ + $H_2S_x$ erhalten wird. Bei zehnmaliger Wäsche mit je 100 ml Wasser und je 30 min. Verweilzeit erhält man eine Restmenge an $H_2S$ / $H_2S_x$ von 10 ppm (Versuch 3, Tabelle 2).

Erhöht man die Wassermenge auf 478 ml/kg Schwefel und die Temperatur auf 140°C, so wird ebenfalls ein schlechtes Ergebnis erhalten (Beispiel 2 aus Tabelle 2). Auch bei einer $H_2S$/$H_2S_x$-Menge von 72 ppm im Einsatzschwefel und 186 ml Wasser pro kg S erhält man bei einmaligem Mischen ein schlechtes Ergebnis (Versuch 6, Tab.2).

Auch eine sehr große Wassermenge von 2500 ml/kg S führt bei einem einmaligen Waschvorgang zu einem schlechten Ergebnis (Beispiel 5, Tabelle 2).

Verwendet man sehr kleine Wassermengen und erhöht die Anzahl der Waschvorgänge auf 20, so wird eine Restmenge an $H_2S/H_2S_x$ von 30 ppm erhalten (Versuch 4, Tab.2).

Eingesetzter grauer Schwefel veränderte seine Graufärbung durch die Wäsche mit Wasser allein nur geringfügig.
Die Versuche aus Tabelle 1 machen deutlich, daß nach dem erfindungsgemäßen Verfahren in technisch sehr einfacher Weise, nämlich durch einfaches Mischen des flüssigen Schwefels mit Wasser in Gegenwart der erfindungsgemäßen Zusätze und anschließender Phasentrennung ein sehr reiner Schwefel sowohl bezüglich $H_2S/H_2S_x$ als auch bezüglich Feststoffen erhalten wird.

Die Versuche 1 und 7 (Tabelle 1) wurden kontinuierlich während 1000 Stdn. durchgeführt(Versuch 1 mit 200 ml Wasser/kg S).
In beiden Fällen wurde $H_2S/H_2S_x$ bis auf eine Restmenge < 1 ppm entfernt. In der Apparatur wurden keine Anbackungen festgestellt.
Der erhaltene Schwefel war sehr hell und rein.

Besonders wichtige Vorteile gegenüber dem Stand der Technik sind bei dem erfindungsgemäßen Verfahren kurze Verweilzeiten und kleine Waschwassermengen. Erfindungsgemäß werden trotz kurzer Verweilzeiten die Polysulfide vollständig zersetzt.
Auch im technischen Maßstab(1 m³ flüssiger Schwefel/Std.) wird kein Schäumen beobachtet.

Bedenkt man, daß in Raffinerien Schwefelmengen von bis zu 1000 t/Tag erzeugt werden, wird deutlich, welche Bedeutung das erfindungsgemäße Verfahren für die technische Schwefelreinigung hat sowohl im Hinblick auf die technische Durchführung als auch bezüglich der Anlagen-Investitionskosten.

0200147

Wesseling, 09.04.1986
NL/Dr.Hö-Ss  - 2115 -
Unser Zeichen: UK 361a

Verfahren zum Reinigen von flüssigem
Schwefel

----------------------------------------

Patentansprüche

1. Verfahren zum Reinigen von flüssigem Schwefel mit flüssigem
   Wasser, wobei die Reinigung ab einer Temperatur erfolgt,
   bei der der Schwefel zumindest teilweise flüssig bis zu
   einer Temperatur von 400°C und einem Druck zwischen Normaldruck oder geringem Unterdruck bis zum kritischen
   Druck  von Wasser, dadurch gekennzeichnet, daß das Wasser
   Ammoniak und/oder Amine und/oder Ammoniumverbindungen und/
   oder Hydrazin in einer Menge von 1 ppm bis 20 Gew.%, bevorzugt in einer Menge von 5 ppm bis 10 Gew.% und besonders
   bevorzugt von 10 ppm bis 5 Gew.% enthält, daß die Kontaktzeit zwischen der Schwefel- und Wasserphase 1 Sekunde bis
   3 Stunden und bevorzugt von 1 Sekunde bis 60 Minuten beträgt.

2. Verfahren nach Anspruch 1, dadurch gekennzeichnet, daß das
   Wasser $NH_3$ enthält.

3. Verfahren nach den Ansprüchen 1 und 2, dadurch gekennzeichnet, daß 10 g - 5000 g Wasser pro kg Schwefel, bevorzugt
   von 10 g bis 2000 g Wasser pro kg Schwefel und besonders
   bevorzugt von 10 g - 1000 g Wasser pro kg Schwefel eingesetzt werden.

4. Verfahren nach den Ansprüchen 1 - 3, dadurch gekennzeichnet,
   daß das in die Reinigung eingesetzte Wasser nach Phasentrennung zumindest teilweise in die Reinigung rückgeführt
   wird.

- 2 -

5. Verfahren nach den Ansprüchen 1 - 4, dadurch gekennzeichnet,
   daß bei einer Temperatur von 110°C bis 160°C, bevorzugt
   bei einer Temperatur von 110°C bis 140°C gearbeitet wird.

6. Verfahren nach den Ansprüchen 1 - 5, dadurch gekennzeichnet,
   daß flüssiges Wasser und flüssiger Schwefel nach dem Mixer/
   Settler-Prinzip miteinander in Kontakt gebracht werden.

7. Verfahren nach den Ansprüchen 1 - 6, dadurch gekennzeichnet,
   daß flüssiges Wasser und flüssiger Schwefel mittels Pumpen
   als Mischpumpen miteinander in Kontakt gebracht werden.

8. Verfahren zum Reinigen von flüssigem Schwefel in Flüssigschwefeltanks mit flüssigem Wasser, wobei die Reinigung
   ab einer Temperatur erfolgt, bei der der Schwefel zumindest
   teilweise flüssig ist bis zu einer Temperatur von 160°C,
   und einem Druck von Normaldruck bis 7 bar, dadurch gekennzeichnet, daß das Wasser Ammoniak und/oder Amine und/oder
   Ammoniumverbindungen und/oder Hydrazin in einer Menge von
   1 ppm bis 20 Gew.%, bevorzugt von 5 ppm bis 10 Gew.% und
   besonders bevorzugt von 10 ppm bis 5 Gew.% enthält, daß
   die Kontaktzeit zwischen der Schwefel- und Wasserphase 30
   Sekungen bis 48 Stunden beträgt, daß das Verhältnis von
   Wasser zu Schwefel 0,1 zu 10 bis 1000:1 beträgt und daß
   das Wasser zumindest teilweise im Kreislauf durch den Tank
   gefahren wird.

9. Verfahren nach Anspruch 8, dadurch gekennzeichnet, daß die
   Wassermenge pro kg Schwefel 10 g bis 1 m³, bevorzugt von
   10 g - 2000 g und besonders bevorzugt von 10 g - 1000 g
   pro kg Schwefel beträgt.

10. Verfahren nach den Ansprüchen 1 - 8, dadurch gekennzeichnet,
    daß das Waschwasser thermisch, ggfs. unter Zusatz von Strippgasen und/
    oder Strippdampf von Sulfiden und $H_2S$ befreit wird und in die Schwefel-
    wäsche rückgeführt wird.